# EUROPEAN PATENT APPLICATION

(11) **EP 4 765 851 A1**
(43) Date of publication of application: **24.06.2026**
(21) Application number: 25223254.1
(22) Date of filing: 15.12.2025
(51) Int. Cl.: H04N 25/534, H04N 23/745, H04N 25/708, H04N 25/773

(54) **PHOTOELECTRIC CONVERSION ELEMENT, PHOTOELECTRIC CONVERSION DEVICE, PHOTOELECTRIC CONVERSION METHOD, AND STORAGE MEDIUM**

(30) Priority: 20.12.2024 JP 2024224625
(71) Applicant: Canon Kabushiki Kaisha, Tokyo, 146-8501 (JP)
(72) Inventor: KOBAYASHI, Shigeyuki, Tokyo, 146-8501 (JP)
(74) Representative: TBK

(57) **Abstract**

A photoelectric conversion element includes: an avalanche photodiode; a first counter configured to count each of an output signal of the avalanche photodiode of a first pixel and an output signal of the avalanche photodiode of a second pixel; a calculation unit configured to generate third output signals from the output signal of the avalanche photodiode of the first pixel and the output signal of the avalanche photodiode of the second pixel; and a second counter circuit configured to count the number of third output signals.

## Description

### TECHNICAL FIELD

The present disclosure relates to a photoelectric conversion element, a photoelectric conversion device, a photoelectric conversion method, and a storage medium.

### BACKGROUND

In recent years, photoelectric conversion elements have been proposed which digitally measure the number of photons arriving at avalanche photodiodes (APDs) and output measured values as photoelectrically converted digital signals from pixels.

Japanese Patent Application Laid-open No. 2020-123847 discloses a photoelectric conversion device that enables appropriate detection of the number of cycles in which avalanche multiplication occurs by controlling a timing of ADP recharging using a pulse signal.

In the photoelectric conversion device disclosed in Japanese Patent Application Laid-open No. 2020-123847, one photon can be counted for each cycle of a pulse generated by a pulse generation circuit. In this scheme, count omission may occur when a plurality of photons are incident during one pulse cycle.

However, when general steady light is imaged, an influence of count omission can be reduced through a correction process by statistically predicting the number of photons incident in one pulse cycle of a pulse.

On the other hand, under an environment in which a light source where light blinks within one frame, in particular, or in a case where a light source or the like moving within a frame is used, an LED light source using a driving method of a pulse modulation scheme is used as an illumination, many count omissions occur compared to a case where steady light is used. Therefore, accuracy of a process of correcting count omissions may deteriorate and quality of an image may deteriorate.

### SUMMARY

According to an aspect of the present disclosure, a photoelectric conversion element includes: an avalanche photodiode; a first counter configured to count each of an output signal of the avalanche photodiode of a first pixel and an output signal of the avalanche photodiode of a second pixel; a calculation unit configured to generate third output signals from the output signal of the avalanche photodiode of the first pixel and the output signal of the avalanche photodiode of the second pixel; and a second counter circuit configured to count the number of third output signals.

Further features of the present invention will become apparent from the following description of embodiments with reference to the attached drawings.

### BRIEF DESCRIPTION OF THE DRAWINGS

FIG. 1 is a diagram illustrating a configuration example of a photoelectric conversion element according to a first embodiment of the disclosure.
FIG. 2 is a diagram illustrating a configuration example of a sensor substrate according to the first embodiment.
FIG. 3 is a diagram illustrating a configuration example of a circuit substrate according to the first embodiment.
FIG. 4 is a diagram illustrating an example of an equivalent circuit of two adjacent pixels N and N+1 and signal processing circuits corresponding to two pixels according to the first embodiment.
FIG. 5 is a diagram illustrating an example of a timing chart in the photoelectric conversion element according to the first embodiment.
FIG. 6A is a diagram illustrating an example of a count number of steady light according to the first embodiment.
FIG. 6B is a diagram illustrating an example of a count number of blinking light according to the first embodiment.
FIG. 6C is a diagram illustrating an illumination intensity of a region of interest when there is a light source moving within one frame.
FIG. 7 is a diagram illustrating a configuration example of a circuit substrate according to a second embodiment.
FIG. 8 is a diagram illustrating a configuration example of a circuit substrate according to a third embodiment.
FIG. 9 is a diagram illustrating an example of an equivalent circuit of two adjacent pixels N and N+1 and signal processing circuits corresponding to two pixels according to a fourth embodiment.
FIG. 10A is a diagram illustrating an example of a count number of steady light according to the fourth embodiment.
FIG. 10B is a diagram illustrating an example of a count number of blinking light according to the fourth embodiment.
FIG. 11 is a diagram illustrating a configuration example of a circuit substrate according to a fifth embodiment.
FIG. 12 is a diagram illustrating an example of an equivalent element of a photoelectric conversion element according to a sixth embodiment.
FIG. 13 is a functional block diagram illustrating a configuration example of a photoelectric conversion device in which a photoelectric conversion element according to first to seventh embodiments is used.

### DESCRIPTION OF THE EMBODIMENTS

Hereinafter, with reference to the accompanying drawings, favorable modes of the disclosure will be described using Embodiments. In each diagram, the same reference signs are applied to the same members or elements, and duplicate description will be omitted or simplified.

### First Embodiment

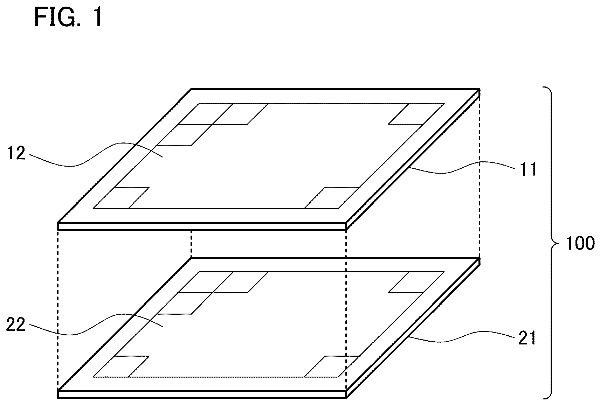

FIG. 1 is a diagram illustrating a configuration example of a photoelectric conversion element 100 according to a first embodiment of the disclosure. A sensor substrate 11 includes a pixel region 12. The circuit substrate 21 includes a circuit region 22 that processes a signal detected in the pixel region 12.

In the embodiment, an example of a photoelectric conversion device that has a so-called stacked structure in which the photoelectric conversion element 100 is configured such that two substrates which are the sensor substrate 11 and the circuit substrate 21 are stacked and electrically connected will be described. However, the photoelectric conversion device may have a so-called non-stacked structure in which a configuration including the sensor substrate and a configuration including the circuit substrate are arrayed in a common semiconductor layer.

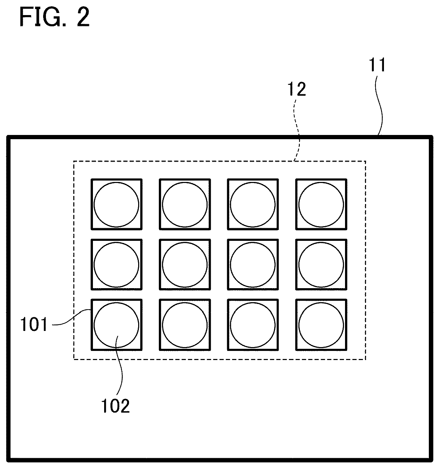

FIG. 2 is a diagram illustrating a configuration example of the sensor substrate 11 according to the first embodiment. The pixel region 12 of the sensor substrate 11 includes a plurality of pixels 101 arrayed in a 2-dimensional form across pluralities of rows and columns. The pixel 101 includes a photoelectric conversion unit 102 that includes an avalanche photodiode (hereinafter referred to as an APD). The number of rows and the number of columns of the pixel array forming the pixel region 12 are not particularly limited.

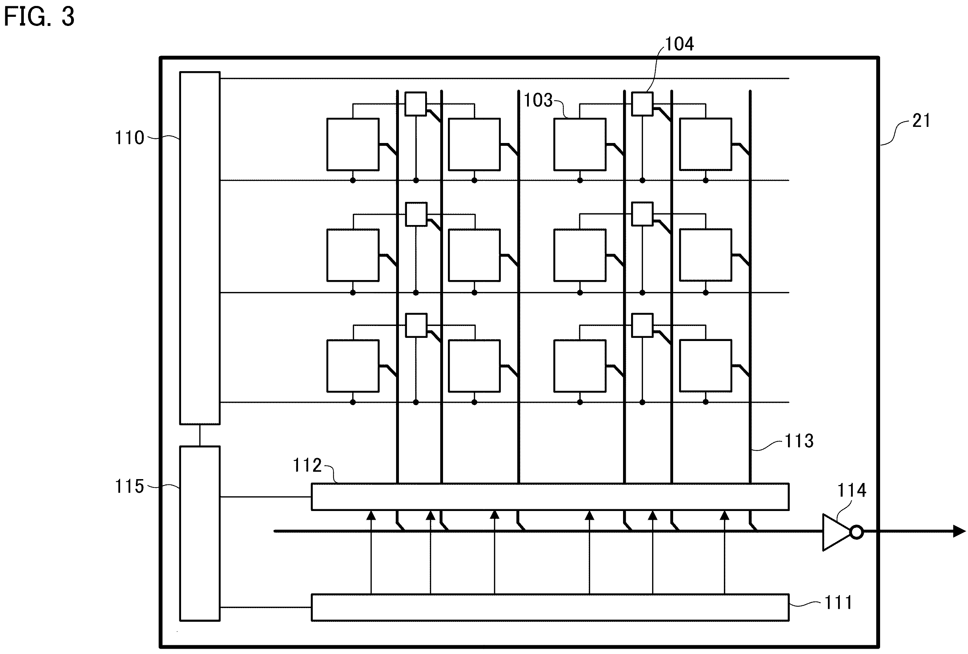

FIG. 3 is a diagram illustrating a configuration example of a circuit substrate 21 according to the first embodiment. The circuit substrate 21 includes signal processing circuits 103 that process charges photoelectrically converted by the photoelectric conversion units 102 in FIG. 2, a signal processing circuit 104 that performs a calculation operation on internal signals between the adjacent signal processing circuits 103, and a read circuit 112. The circuit substrate 21 further includes a control pulse generation unit 115, a horizontal scanning circuit 111, a signal line 113, an output circuit 114, and a vertical scanning circuit 110.

The vertical scanning circuit 110 receives a control pulse supplied from the control pulse generation unit 115 and supplies the control pulse to each pixel. In the vertical scanning circuit 110, a logical circuit such as a shift register or an address decoder is used.

A signal output from the photoelectric conversion unit 102 of the pixel is processed by the signal processing circuits 103 and 104. The signal processing circuit 103 includes a counter or a memory and retains a count value (digital value) in the memory. The signal processing circuit 104 includes a logic AND circuit, a counter, and a memory and retains the count value in the memory.

The horizontal scanning circuit 111 sequentially selects each column in order to read a signal from the memory of each pixel in which the digital signal is retained. For the signal line 113, a signal is output to the selected column from the signal processing circuit 103 or 104 selected by the vertical scanning circuit 110. The signal output to the signal line 113 is output to the outside of the photoelectric conversion element 100 via the output circuit 114.

As illustrated in FIGS. 2 and 3, the pluralities of signal processing circuits 103 and 104 are arrayed in a region overlapping with the pixel region 12 in a plan view. The vertical scanning circuit 110, the horizontal scanning circuit 111, the read circuit 112, the output circuit 114, and the control pulse generation unit 115 are arrayed to overlap with ends of the sensor substrate 11 and the pixel region 12 in a plan view.

In other words, the sensor substrate 11 has the pixel region 12 and a non-pixel region arrayed around the pixel region 12. The vertical scanning circuit 110, the horizontal scanning circuit 111, the read circuit 112, the output circuit 114, and the control pulse generation unit 115 are arrayed in regions overlapping with the non-pixel region in a plan view.

The array of the signal lines 113 and the array of the read circuit 112 and the output circuit 114 are not limited to that of FIG. 3. For example, the signal lines 113 may extend in the row direction and the read circuit 112 may be arrayed at tips to which the signal lines 113 extend.

A function of the signal processing unit may not necessarily be provided for each of the photoelectric conversion units, and one signal processing unit may be shared by a plurality of photoelectric conversion units to sequentially perform signal processing.

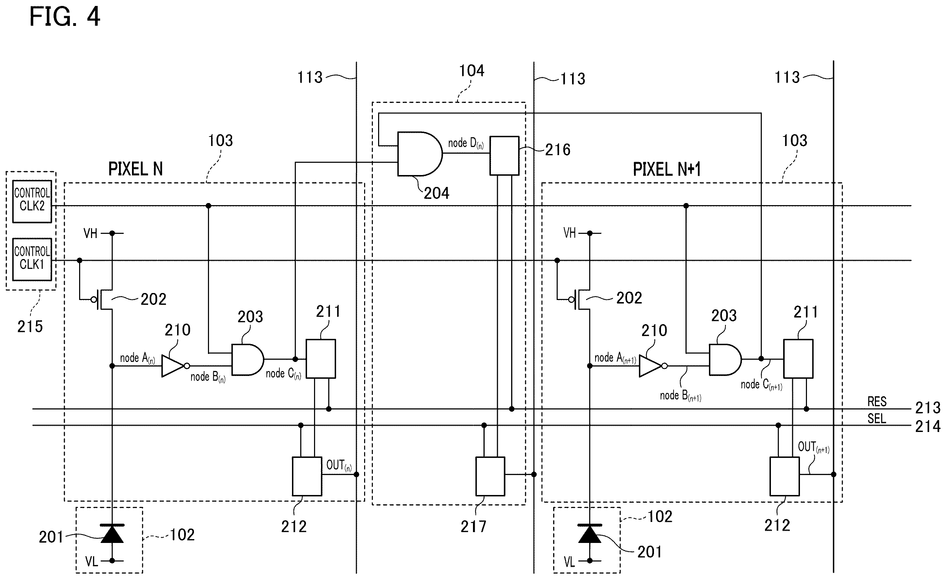

FIG. 4 is a diagram illustrating an example of an equivalent circuit of two adjacent pixels N and N+1 and signal processing circuits 103 and 104 corresponding to two pixels according to the first embodiment. Here, the pixels N and N+1 function as first and second pixels, respectively.

The APD 201 generates a pair of charges in accordance with incident light through photoelectric conversion. One of two nodes of the APD 201 is connected to a power supply line supplied with a driving voltage VL (first voltage). The other of the nodes of the APD 201 can be connected via a switch 202 to a power supply line supplied with a driving voltage VH (second voltage) higher than the voltage VL.

In FIG. 4, one node of the APD 201 is an anode and the other node of the APD 201 is a cathode. The anode and the cathode of the APD 201 are supplied with a reverse bias voltage so that the APD 201 performs an avalanche multiplication operation. In a state where such a voltage is supplied, charges generated by incident light cause avalanche multiplication, and thus an avalanche current is produced.

When the reverse bias voltage is supplied, there are a Geiger mode in which a voltage difference between the anode and the cathode is greater than a breakdown voltage and a linear mode in which a voltage difference between the anode and the cathode is near or equal to or less than a breakdown voltage.

An APD operating in the Geiger mode is referred to as a single photon avalanche diode (SPAD). In the case of the SPAD, for example, the voltage VL (first voltage) is - 30 V and the voltage VH (second voltage) is 1 V.

The switch 202 is connected to a power supply line supplied with the driving voltage VH and one node of the anode and the cathode of the APD 201. The switch 202 switches a resistance value between the APD 201 and the power supply line supplied with the driving voltage VH.

That is, the switch 202 is connected to one node of the anode and the cathode of the avalanche photodiode and the power supply line supplied with the driving voltage, and switches a resistance value between the one node and the power supply line.

In the switching of the resistance value, in one embodiment, the resistance value is changed 10 times or more and in another embodiment, the resistance value is changed 100 times or more. Hereinafter, a state in which the resistance value is lowered is referred to as an ON state of the switch 202 and a state in which the resistance value is raised is referred to as an OFF state of the switch 202.

The switch 202 functions as a quenching element. That is, the switch 202 functions as a load circuit (quenching circuit) during signal amplification through the avalanche multiplication, suppresses a voltage supplied to the APD 201, and performs a quenching operation of suppressing the avalanche multiplication.

The switch 202 performs a recharging operation of returning the voltage supplied to the APD 201 to the driving voltage VH by flowing a current corresponding to a voltage drop through the quenching operation. The switch 202 can be configured with a MOS transistor. FIG. 4 illustrates the switch 202 that is a PMOS transistor.

A control signal CLK1 (hereinafter sometimes referred to as a control CLK1) of the switch 202 supplied from a signal generation unit 215 is applied to a gate electrode of the MOS transistor configured in the switch 202. ON and OFF of the switch 202 are controlled by controlling the voltage applied to the gate electrode of the switch 202.

The signal processing circuit 103 includes a waveform shaping unit 210, a counter circuit 211, a selection circuit 212, and an AND circuit 203. The counter circuit 211 functions as a first counter that counts each of an output signal of an avalanche photodiode of a first pixel and an output signal of an avalanche photodiode of a second pixel.

The waveform shaping unit 210 shapes a variation in voltage of the cathode of the APD 201 obtained during photon detection and outputs a pulse signal. As the waveform shaping unit 210, for example, an inverter circuit is used. FIG. 4 illustrates an example in which one inverter is used as the waveform shaping unit 210, but a circuit in which a plurality of inverters are connected in series may be used or any circuit that has a waveform shaping effect may be used.

The counter circuit 211 measures a pulse signal output from the waveform shaping unit 210 and retains a count value. The count value retained in the counter circuit 211 is reset when a control pulse RES is supplied from the vertical scanning circuit 110 in FIG. 3 via a driving line 213 (not illustrated in FIG. 3).

A timing at which a pulse signal in the counter circuit 211 is measured is controlled by the AND circuit 203. One input of the AND circuit 203 is connected to an output of the waveform shaping unit 210, the other input is connected to the control signal CLK2 (hereinafter sometimes referred to as a control CLK2) supplied from the signal generation unit 215, and an output is connected to the counter circuit 211.

Here, the control CLK1 serves as a negative pulse clock and the control CLK2 serves as a positive pulse clock in the following description, but the disclosure is not limited thereto. For example, when the control signal CLK2 serves as a negative pulse clock, a waveform shaping unit that is an inverter circuit may be inserted in an input of the control signal CLK2 side of the AND circuit 203.

The selection circuit 212 is supplied with a control pulse SEL via a driving line 214 (not illustrated in FIG. 3) in FIG. 4 from the vertical scanning circuit 110 in FIG. 3 to switch between electrical connection and non-connection between an output end of the counter circuit 211 and the signal line 113. The selection circuit 212 includes, for example, a buffer circuit that outputs a signal. An output signal OUT illustrated in FIG. 4 is an output signal from a pixel.

The pixel N and the signal processing circuit corresponding to the pixel N have been described, and the pixel N+1 adjacent to the pixel N is illustrated in FIG. 4. Since a structure of the pixel N+1 is the same as that of the pixel N, description thereof will be omitted.

The signal processing circuit 104 that takes a logical AND of output signals of the pixels N and N+1 is provided between the pixels N and N+1. The signal processing circuit 104 includes an AND circuit 204, a counter circuit 216, and a selection circuit 217.

One input of the AND circuit 204 is connected to an output of the AND circuit 203 of the pixel N serving as the first pixel, and the other input is connected to an output of the AND circuit 203 of the pixel N+1 serving as the second pixel.

The AND circuit 204 functions as a calculation unit that generates a third output signal from an output signal of the avalanche photodiode of the first pixel (pixel N) and an output signal of the avalanche photodiode of the second pixel (pixel N+1). The calculation unit according to the embodiment performs a logical AND operation of the output signal of the avalanche photodiode of the first pixel and the output signal of the avalanche photodiode of the second pixel.

An output (node D(n)) of the AND circuit 204 serving as the calculation unit is connected to the counter circuit 216, and the counter circuit 216 counts a logical AND (third output signal) of pulse signal outputs of the pixels N and N+1. The counter circuit 216 functions as a second counter circuit that counts the number of third output signals.

When the driving line 213 is connected to the counter circuit 216 and the control pulse RES is supplied, a count value retained in the counter circuit 116 is reset. The selection circuit 217 is connected to the counter circuit 216, and the control pulse SEL is supplied via the driving line 214 to switch between electrical connection and non-connection between the output end of the counter circuit 216 and the signal line 113.

The selection circuit 217 may have the same circuit configuration as the selection circuit 212 and includes, for example, a buffer circuit.

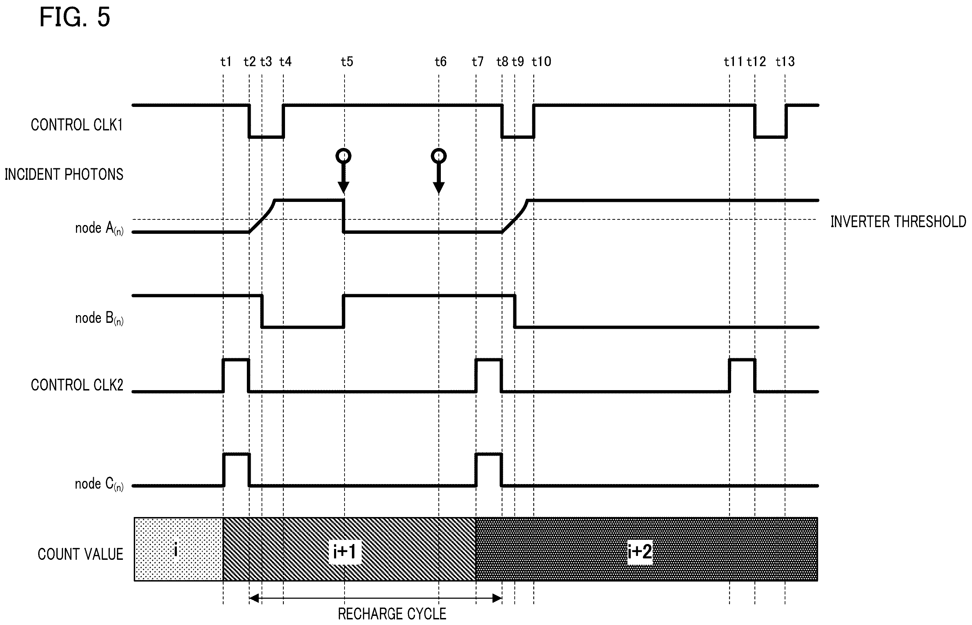

FIG. 5 is a diagram illustrating an example of a timing chart in the photoelectric conversion element according to the first embodiment. FIG. 5 schematically illustrates a relationship among timings of the control CLK1 and the control CLK2, output nodes A(n), B(n), and C(n), and the count value retained in the counter circuit 211 in the pixel N in FIG. 4.

At time t1, the control signal CLK2 enters a high level. The node B(n) that has already entered the high level due to the avalanche multiplication caused by photons incident earlier than time t1 and the AND circuit 203 to which the control signal CLK2 at the high level is input change the output node C(n) to the high level.

Accordingly, the counter circuit 211 increases the count value to i=>i+1. At time t2, the control signal CLK1 enters a low level and the switch 202 enters an ON state. The switch 202 draws a current from a power supply VH, and a potential of the node A(n) is charged up to the vicinity of VH.

At time t2, the control CLK2 switches to the low level and the node C(n) is accordingly changed to the low level as well. At time t3, the potential of the node A(n) exceeds a threshold of the waveform shaping unit 210 that is an inverter circuit and the node B(n) switches to the low level. At time t4 shortly after the potential of the node A(n) enters an equilibrium state, the control signal CKL1 enters the high level and the pixel enters a state in which photons can be detected.

At time t5, the photons are incident, the potential of the node A(n) is lowered to the vicinity of VL through avalanche multiplication of the pixel and a quenching operation of the switch 202, and the node B(n) switches to the high level. At time t6, the photons are also incident. However, the photons are ignored and not counted since the avalanche multiplication has already been caused by the photons at time t5.

In other words, in one embodiment, only one photon can be counted during a recharge cycle. At time t7, the control signal CLK2 enters the high level. Then, since the node B(n) and the control signal CLK2 are at the high level together, the output node C(n) of the AND circuit 203 is changed to the high level.

At this time, the counter circuit 211 increases the count value again. Since the change from t8 to t10 is the same as the change from t2 to t4, description thereof will be omitted. Since the photons are not incident from t10 to t11, the count value of the counter circuit 211 is not increased.

A cycle of the control CLK1 and the control CLK2 is referred to as a recharge cycle. During one cycle, in one embodiment, only one photon can be counted. When two or more photons are incident, count omission occurs.

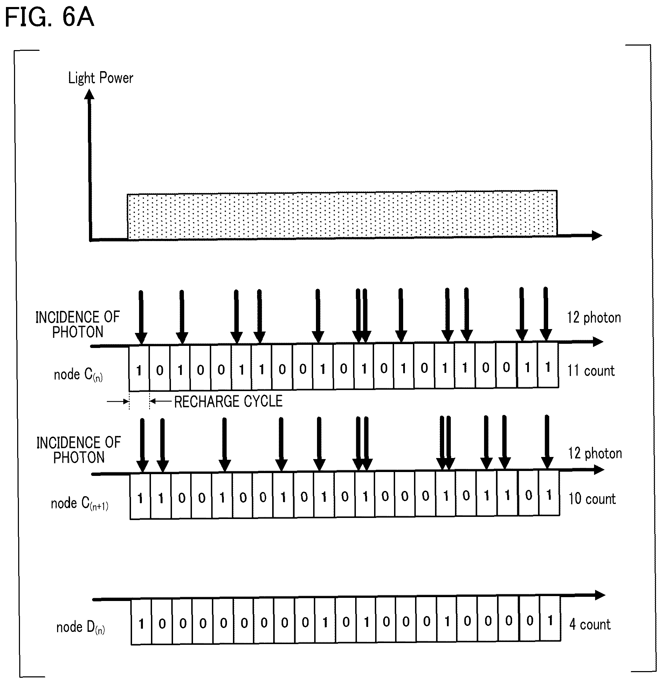

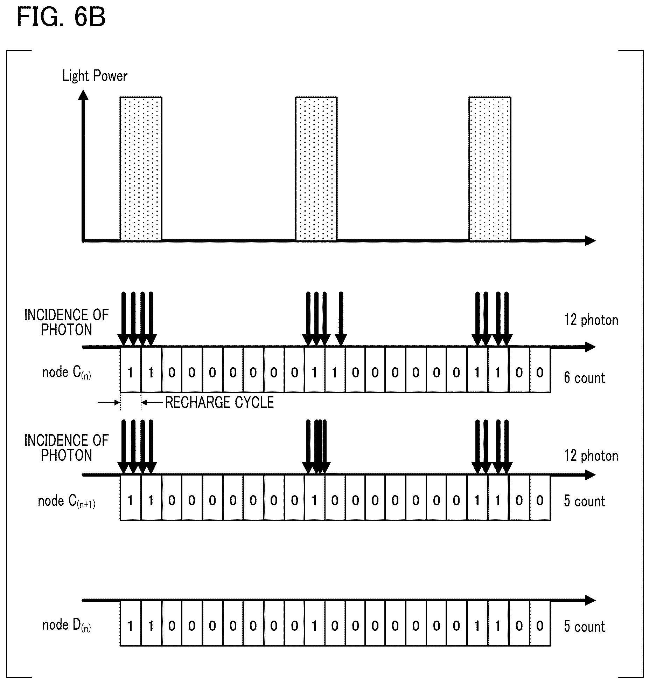

FIG. 6A is a diagram illustrating an example of a count number of steady light according to the first embodiment. FIG. 6B is a diagram illustrating an example of a count number of blinking light according to the first embodiment. FIGS. 6A and 6B are diagrams used to describe a method of determining whether count omission occurs for a light source that blinks in the photoelectric conversion element according to the first embodiment.

FIGS. 6A and 6B both illustrate temporal light-emitting characteristics of the light source in order from above, a relationship between a photon incident on the pixel N and the node C(n), a relationship between a photon incident on the pixel N+1 and the node C(n+1), and a logical AND (node D(n)) of the nodes C(n) and C(n+1).

FIG. 6A illustrates a case where the photons are incident on the pixels N and N+1 from the light source that emits light stationarily and twelve photons are incident on each pixel.

In the pixel N, since two photons among the twelve photons are incident during the same recharge cycle, the count value is 11. In the pixel N+1, two photons are incident on two occasions during the same recharge cycle and the count value becomes 10, as illustrated.

Since the node D(n) takes a logical AND of the nodes C(n) and C(n+1) during each recharge cycle, the node D(n) becomes 1 during a cycle in which the pixels N and N+1 simultaneously count "1", which results in a total of four counts.

In the case of steady light as in FIG. 6A, the incident photons are incident in a scattered manner. Therefore, when a logical AND of the count values of adjacent pixels is taken, the count value decreases.

On the other hand, in the case of a pulsed (blinking) light source as illustrated in FIG. 6B, the photons are concentrated in a specific cycle. When it is assumed that an average amount of light during an entire cycle of FIGS. 6A and 6B is equal, the amount of light during a light emission cycle of the blinking light source becomes larger than that of steady light, and thus the photons are incident in a concentrated manner.

For example, in the node C(n) of the pixel N, count omission occurs and a total count number decreases to six although twelve photons are incident. For the pixel N+1, a total count number decreases to five due to count omission although twelve photons are incident. However, since the count is also concentrated during a light-emitting cycle for the pixels N and N+1, the count number becomes five despite taking the logical AND, and thus becomes a value that is nearly the same as the count value for each pixel.

As described above, by comparing the counter value of a pixel itself with a counter value obtained by taking a logical AND of adjacent pixels, it is possible to determine whether the count omission has occurred. That is, when an appropriate threshold is set and a value obtained by subtracting a counter value of a logical AND of the pixels N and N+1 from a counter value of the pixel N is greater than a threshold, it can be determined that the count omission has not occurred. When the value is less than the threshold, it can be determined that count omission has occurred.

That is, when the threshold is X and (count value of node C(n))-(count value of node D(n))>X1, it can be determined that count omission has occurred. In the first embodiment, occurrence of count omission is detected in this way and a count omission detection signal is output.

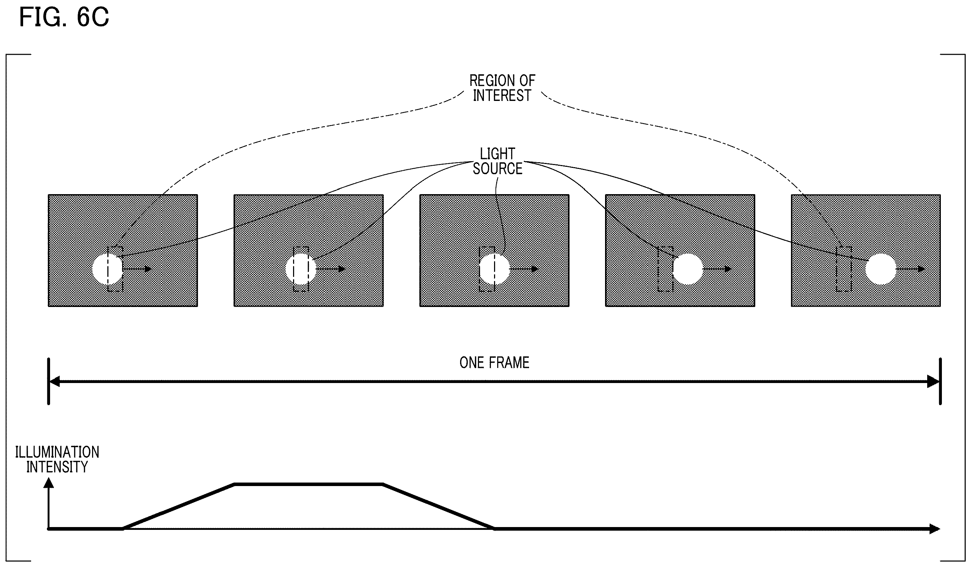

FIG. 6B illustrates the case where blinking light is used as illumination light. However, even when a moving light source is used for illumination light, the count omission occurs similarly. FIG. 6C is a diagram illustrating an illumination intensity of a region of interest when there is a light source moving within one frame.

From FIG. 6C, it can be understood that, in a region of interest, there are moments at which illumination intensity is strong and weak within one frame. Accordingly, as in the case where the blinking light source is used for illumination light, photons are incident in a concentrated manner during a specific recharge cycle, which results in increased occurrence of count omission.

### Second Embodiment

In a second embodiment, a case of a color sensor in which a photoelectric conversion element includes a Bayer-array color filter will be described. In the second embodiment, it is determined for each color whether count omission has occurred.

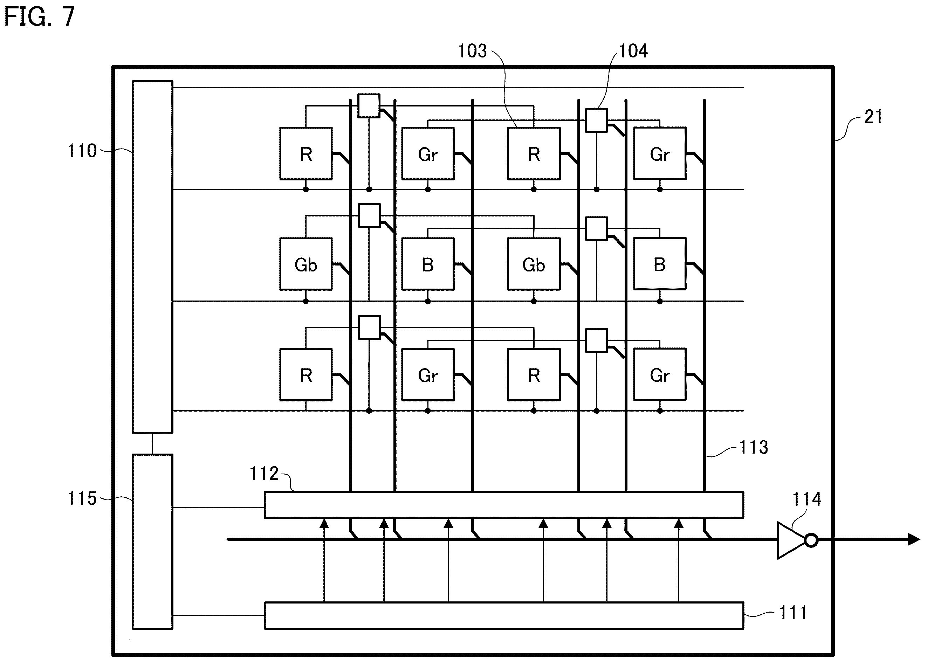

FIG. 7 is a diagram illustrating a configuration example of the circuit substrate 21 according to the second embodiment. In FIG. 7, each pixel 101 corresponding to each signal processing circuit 103 includes one of color filters of red (R), green (Gr), green (Gb), and blue (B). However, array of the color filters may be any array without being limited to Bayer array.

In the first embodiment, a monochrome sensor is used. Therefore, the signal processing circuit 104 that takes a logical AND between pixels connects adjacent pixels to each other. In a color sensor according to the second embodiment, however, adjacent pixels of the same color are connected to each other. That is, in the second embodiment, a color filter for color separation is provided for each pixel. It is assumed that first and second pixels are adjacent pixels of the same color.

In the photoelectric conversion element illustrated in FIG. 7, an R pixel is connected to an R pixel that is adjacent further to the right R pixel beyond the right adjacent Gr pixel by the signal processing circuit 104. Similarly, for the other color, Gr pixels, Gb pixels, and B pixels are connected to each other by the signal processing circuit 104. Since all other modules are the same as those of the first embodiment, description thereof will be omitted.

In this way, in the second embodiment, when the plurality of color sensors are arrayed in the photoelectric conversion element, the signal processing circuit 104 takes a logical AND between adjacent pixels of the same color. It is determined for each color whether count omission has occurred. The occurrence of the count omission for each color is detected and a count omission detection signal is output.

### Third Embodiment

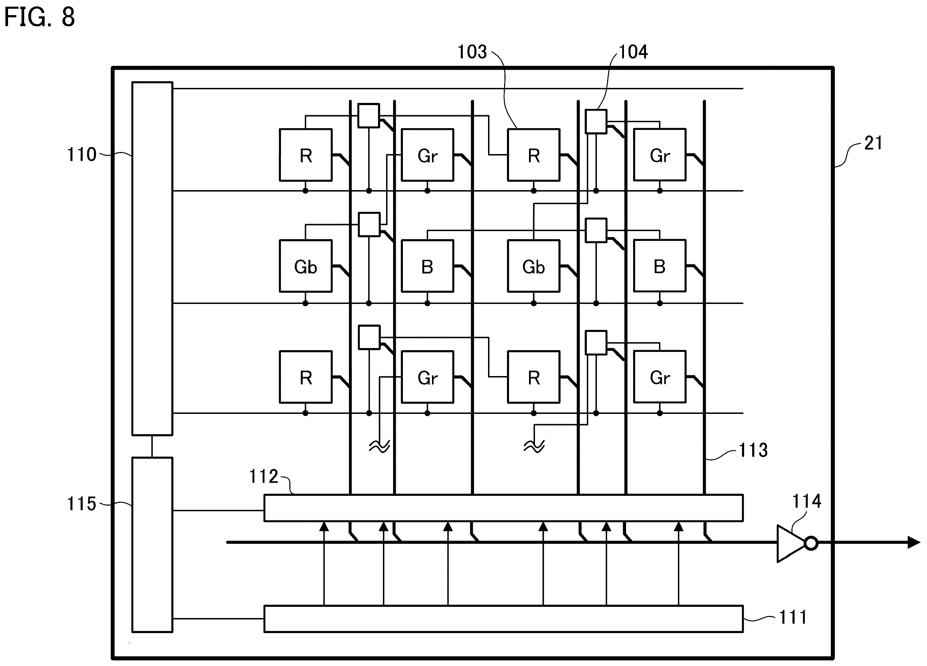

FIG. 8 is a diagram illustrating a configuration example of the circuit substrate 21 according to a third embodiment. In a photoelectric conversion element in FIG. 8, Gr and Gb pixels are treated as the same G pixels and are connected to a common signal processing circuit 104. That is, in the third embodiment, a calculation unit is provided in common for a plurality of pixels.

In this way, in either the configuration of FIG. 7 or 8, as in the first embodiment, in two pixels of the same color, it is determined for each color whether count omission has occurred by comparing a count number in the case of taking a logical AND of pulse signals with a count value of the pixels themselves of the color. The occurrence of the count omission for each color is detected and a count omission detection signal is output.

### Fourth Embodiment

In a fourth embodiment, an example in which the signal processing circuit 104 is configured with an exclusive OR (XOR) will be described. A circuit substrate 21 according to the fourth embodiment is the same as the circuit substrate 21 according to the second or third embodiment. That is, the circuit substrate 21 according to the fourth embodiment may have the configuration of FIG. 7 or 8.

In the signal processing circuit 104 according to the first to third embodiments, the AND circuit 204 serving as a calculation unit is used. However, in the signal processing circuit 104 according to the fourth embodiment, an exclusive OR circuit is used as a calculation unit.

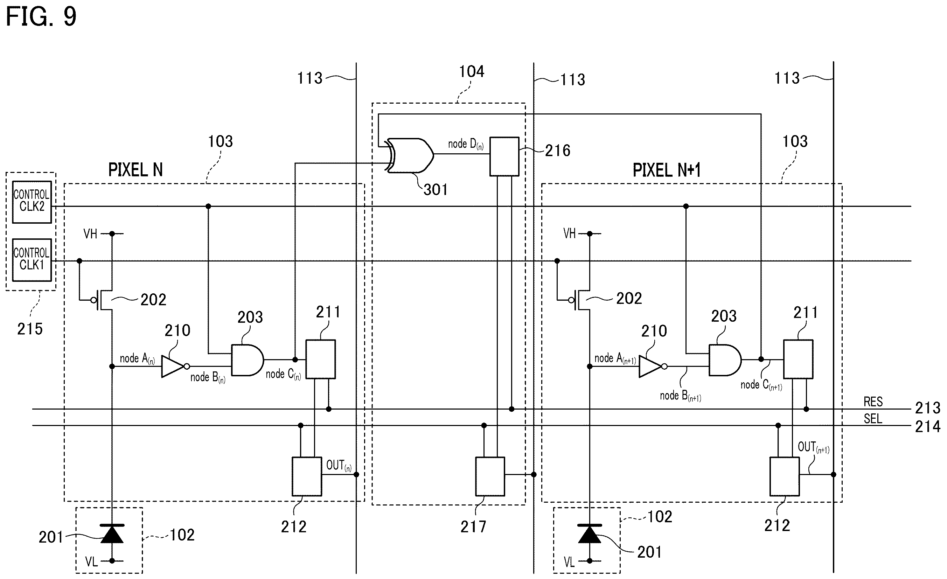

FIG. 9 is a diagram illustrating an example of an equivalent circuit of two adjacent pixels N and N+1 and the signal processing circuits 103 and 104 corresponding to two pixels according to the fourth embodiment.

In FIG. 9, the AND circuit 204 according to the first to third embodiments is replaced by an exclusive OR circuit 301 and the others are the same as those of FIG. 4 described in the first embodiment. In FIG. 9, in each of adjacent pixels of the same color, an output of the AND circuit 203 is input to the exclusive OR circuit 301 and an output of the exclusive OR circuit 301 is connected to the counter circuit 216.

In this way, in the fourth embodiment, the exclusive OR circuit 301 is used as a calculation unit that generates a third output signal from an output signal of an avalanche photodiode of the first pixel and an output signal of an avalanche photodiode of the second pixel.

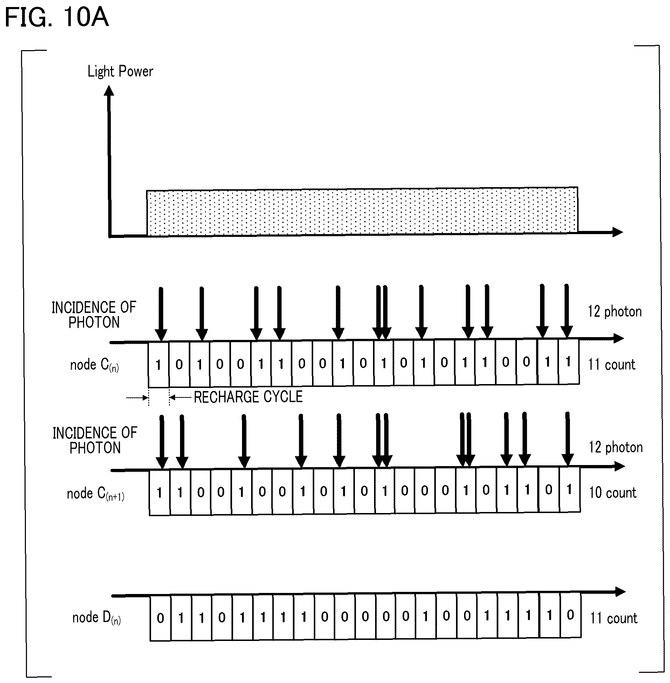

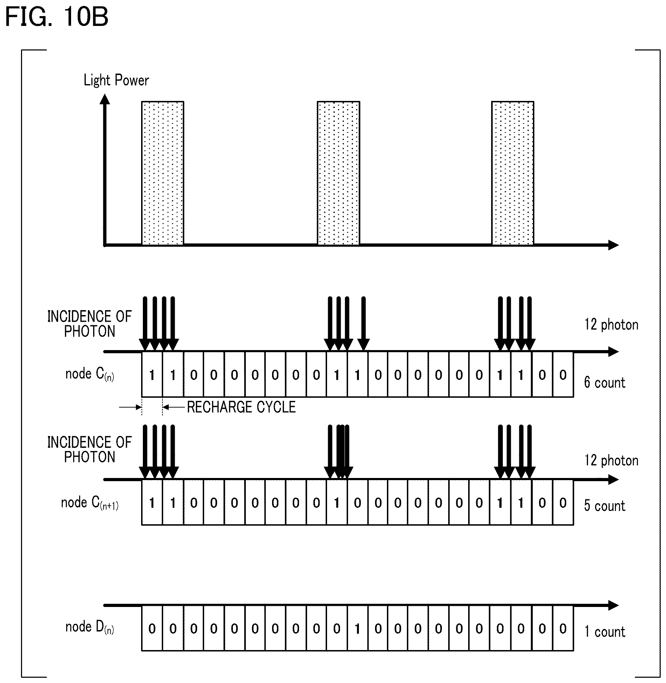

A relationship between photons and a count value when the exclusive OR circuit 301 is used is illustrated in FIGS. 10A and 10B. FIG. 10A is a diagram illustrating an example of a count number of steady light according to the fourth embodiment. FIG. 10B is a diagram illustrating an example of a count number of blinking light according to the fourth embodiment. FIGS. 10A and 10B illustrate examples in which twelve photons are incident during an entire cycle as in the first embodiment. As illustrated in FIG. 10A, since arrival timings of the photons are scattered further in steady light than in blinking light, a count value after taking an exclusive OR is eleven counts.

Conversely, as illustrated in FIG. 10B, in the case of blinking light, photons are concentrated during a blinking cycle. Therefore, a count value after taking an exclusive OR is a value that is as low as one count. In this way, there is difference in a count value of an exclusive OR between the case of steady light and the case of blinking light.

Accordingly, by setting an appropriate threshold, it can be determined that no count omission has occurred when a count value of the exclusive OR is greater than a predetermined threshold. Conversely, it can be determined that count omission has occurred when the count value of the exclusive OR is less than the predetermined threshold. The occurrence of the count omission for each color is detected and a count omission detection signal is output.

In the first to third embodiments, a difference between a variable (a count value of the pixel itself) and a variable (a logical AND count value of an adjacent pixel of the same color) is compared with a fixed value (threshold). In comparison, in the fourth embodiment, a fixed value (threshold) may be compared with a variable (a count value after taking an exclusive OR). Therefore, it is possible to decrease a circuit size when a comparison circuit is provided at a rear stage of the photoelectric conversion element.

### Fifth Embodiment

In a fifth embodiment, an example in which the signal processing circuit 104 configured by a logical AND or array of an exclusive OR is decimated physically will be described. By decimating the array of signal processing circuit 104, it is possible to decrease the entire circuit size and reduce cost.

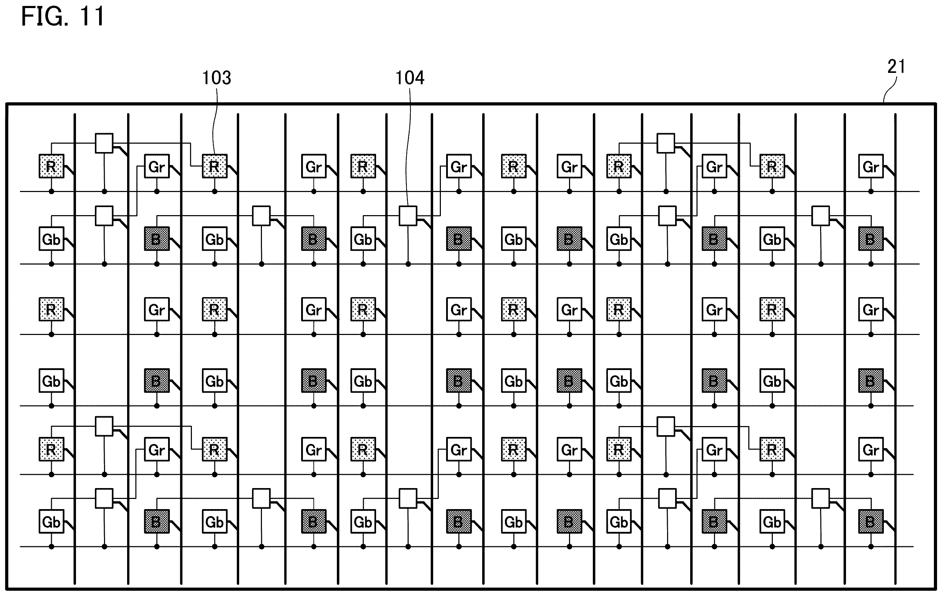

FIG. 11 is a diagram illustrating a configuration example of the circuit substrate 21 according to the fifth embodiment. In the first embodiment, one signal processing circuit 104 is arrayed near two pixels. In the embodiment, however, as illustrated in FIG. 11, one signal processing circuit 104 for each RGB is arrayed near a total of sixteen pixels including four vertical pixels and four horizontal pixels. A decimation ratio is not limited to a specific value any value may be used.

As the decimation ratio is larger, a spatial resolution decreases when presence or absence of count omission is determined. However, it is possible to reduce the circuit size. The decimation ratio may be changed in the vertical and horizontal directions, or a plurality of areas may be defined in all the pixels and the decimation ratio may be changed for each area.

### Sixth Embodiment

In a sixth embodiment, a case where the counter circuit of the Gr pixel in the second embodiment is eliminated will be described. When the counter circuit of the Gr pixel is eliminated, a count value of the Gr pixel itself cannot be read and the resolution of the G pixel may deteriorate. However, it is possible to decrease the entire circuit size and reduce cost.

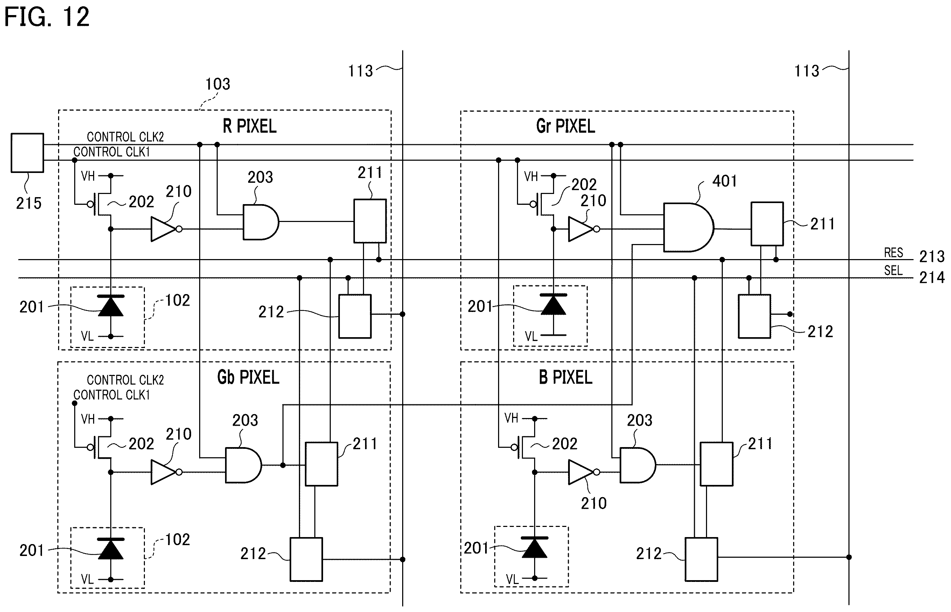

FIG. 12 is a diagram illustrating an example of an equivalent element of a photoelectric conversion element according to the sixth embodiment. FIG. 12 illustrates a configuration in which the array of two pixels illustrated in FIG. 4 is replaced by array of four pixels and a color filter is provided in each pixel to form four pixels of R, Gr, Gb, and B pixels. The four pixels are arrayed 2-dimensionally in the pixel region 12.

In FIG. 12, an output signal and the control CLK2 of the AND circuit 203 of the Gb pixel are input to an AND circuit 401 to which the output signal of the waveform shaping unit 210 of the Gr pixel is input. In the sixth embodiment, the AND circuit 401 is used as a calculation unit that generates a third output signal from an output signal of the avalanche photodiode of the first pixel and an output signal of the avalanche photodiode of the second pixel.

Accordingly, the counter circuit 211 of the Gr pixel does not a count value of the Gr pixel itself and counts a logical AND of the Gr and Gb pixels. In such a configuration, it is possible to decrease a circuit area that is about the same area of a normal Bayer pixel that does not include the signal processing circuit 104, and reduce cost.

In the embodiment, the example in which the counter circuit 211 that counts a count value of the Gr pixel itself is eliminated and the logical AND of the Gr and Gb pixels is counted has been described. However, the counter circuit 211 that counts a count value of the Gb pixel itself may be eliminated and the logical AND of the Gr and Gb pixels may be counted.

### Seventh Embodiment

In a seventh embodiment, an example in which a mode transitions to a driving mode for inhibiting count omission after occurrence of the count omission is detected will be described. As described in FIG. 5, the count omission occurs when a plurality of photons are incident during one recharge cycle.

Accordingly, in order to inhibit the count omission, it is effective to shorten the recharge cycle, that is, increase a driving frequency. In the seventh embodiment, a mode in which the driving frequency is increased in order to inhibit the count omission can be selected. The mode in which the driving frequency is increased in order to inhibit the count omission is referred to as a count omission inhibition mode.

On the other hand, a driving state before the increase in the driving frequency is referred to as a normal mode. As the driving frequency is increased in the count omission inhibition mode, power consumption is also increased. Therefore, in one embodiment, the transition from the normal mode to the count omission inhibition mode is only when count omission occurs without using the count omission inhibition mode constantly.

When the count omission no longer occurs after the mode once transitions to the count omission inhibition mode, absence of the count omission itself cannot be detected. Therefore, in one embodiment, the transition to the normal mode is performed periodically and is confirmed presence or absence of the count omission.

Alternatively, instead of returning to the normal mode periodically, presence or absence of the count omission may be confirmed by returning to the normal mode when brightness or color of a captured image is changed by more than a certain threshold. That is, the occurrence of the count omission for each color is detected and a count omission detection signal is output.

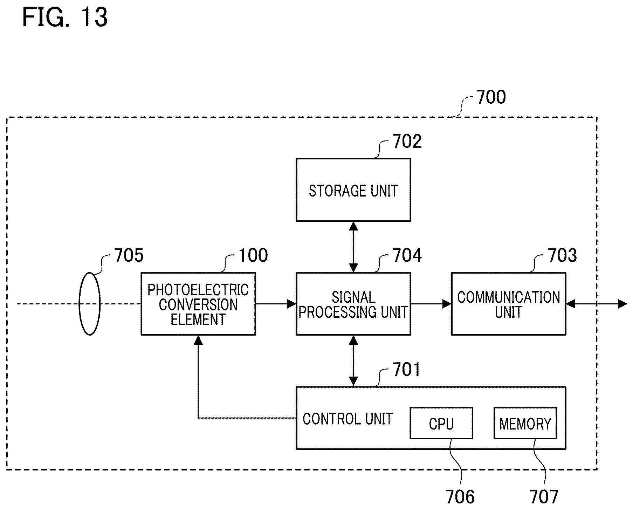

FIG. 13 is a functional block diagram illustrating a configuration example of a photoelectric conversion device in which a photoelectric conversion element according to the first to seventh embodiments is used. Some of the functional blocks illustrated in FIG. 13 are realized by causing a CPU or the like serving as a computer included in the photoelectric conversion device to execute a computer program stored in a memory serving as a storage medium.

However, some or all of the functional blocks may be realized by hardware. As the hardware, a dedicated circuit (ASIC) or a processor (a reconfigurable processor or a DSP) can be used.

The functional blocks illustrated in FIG. 13 may each not be embedded in the same casing or may be configured by different devices connected to each other via signal lines. The functions of the photoelectric conversion device may be embedded to be stacked or non-stacked in a semiconductor chip of the photoelectric conversion element.

A photoelectric conversion device 700 includes the photoelectric conversion element 100, a control unit 701, a storage unit 702, a communication unit 703, a signal processing unit 704, and an imaging optical system 705. The photoelectric conversion element 100 captures an optical image formed by the imaging optical system 705. Based on a signal read from the photoelectric conversion element 100, the control unit 701 detects that count omission occurs.

The control unit 701 functions as a detection unit that performs a detection step of detecting occurrence of count omission of an avalanche photodiode based on at least the above-described third output signal of the photoelectric conversion element.

The control unit 701 functioning as the detection unit may detect occurrence of count omission based on a difference between a count value of the first count circuit and a count value of the second count circuit. Alternatively, occurrence of count omission may be detected based on whether the count value of the second count circuit is less than a predetermined value.

The control unit controls the avalanche photodiodes in order to inhibit occurrence of count omission when the count omission is detected. At this time, for example, at least one of a threshold (saturation determination count number), an exposure time, and a recharge cycle may be controlled such that a maximum recharge number determined by the exposure time and the recharge cycle is greater than a predetermined threshold. Accordingly, a color variation can be inhibited even in an environment in which a blinking light source or the like is used for illumination light is used.

In this case, when count omission is detected, for example, the control may be performed such that the saturation determination count number of the avalanche photodiode is less than the maximum recharge number determined by a quotient of the exposure time divided by the recharge cycle.

The saturation determination count number is an upper limit of the count in the counter circuit 211 and can also be referred to as a maximum count value. The saturation determination count number can be set as a predetermined threshold.

Alternatively, when count omission is detected, a plurality of pixels that have different ratios of the saturation determination count number to the maximum recharge number determined by the quotient of the exposure time divided by the recharge cycle may be set, and output signals of the plurality of pixels may be combined.

Alternatively, when count omission is detected, the ratio of the saturation determination count number to the maximum recharge number determined by the quotient of the exposure time divided by the recharge cycle may be different for each frame, and output signals of the frames may be combined. Even in such cases, a color variation can be inhibited even in an environment in which a blinking light source or the like is used for illumination light.

Alternatively, when count omission is detected, a recharge cycle of the avalanche photodiode corresponding to a color filter of predetermined color may be set to differ from a recharge cycle of the avalanche photodiode corresponding to a color filter of different color.

For example, a recharge cycle of the avalanche photodiode corresponding to a color filter of green may be set to shorter than a recharge cycle of the avalanche photodiode corresponding to a color filter of different color. Accordingly, it is possible to inhibit a color variation.

The signal processing unit 704 performs correction of count omission when the count omission is detected. As the correction of the count omission, for example, the upper limit of a signal level of each pixel is inhibited. Alternatively, correction is performed by reducing saturation of the color signal and making the saturation closer to white.

The signal processing unit 704 may perform a process such as black level correction, gamma curve correction, noise reduction, or data compression instead of the correction of the count omission. When the photoelectric conversion element 100 is a photoelectric conversion element that includes an on-chip color filter and is capable of acquiring color information, a process such as white balance correction or color conversion may be performed.

The control unit 701 includes the CPU 706 serving as a computer and functions as a control unit that control an operation of each unit in the entire photoelectric conversion device 700 based on a computer program stored in the memory 707 serving as a storage medium.

The control unit 701 controls an exposure cycle of each frame of the photoelectric conversion element 100, that is, a photoelectric conversion cycle (a count cycle by the counter circuit 211), through the control pulse generation unit 115 of the photoelectric conversion element 100. The control unit 701 performs control of a timing of the control signal CLK, control of a recharge cycle by the switch 202, and the like.

The storage unit 702 includes, for example, a recording medium such as a memory card or a hard disk. The communication unit 703 includes a wireless or wired interface, and outputs a generated image to the outside of the photoelectric conversion device 700 and also receives a signal from the outside.

While the disclosure has been described with reference to embodiments, it is to be understood that the disclosure is not limited to the disclosed embodiments. The scope of the following claims is to be accorded the broadest interpretation so as to encompass all such modifications and equivalent structures and functions.

In addition, as a part or the whole of the control according to the embodiments, a computer program realizing the function of the embodiments described above may be supplied to the photoelectric conversion device or the like through a network or various storage media. Then, a computer (or a CPU, an MPU, or the like) of the photoelectric conversion device or the like may be configured to read and execute the program. In such a case, the program and the storage medium storing the program configure the invention.

In addition, the disclosure includes those realized using at least one processor or circuit configured to perform functions of the embodiments explained above. For example, a plurality of processors may be used for distribution processing to perform functions of the embodiments explained above.

This application claims the benefit of Japanese Patent Application No. 2024-224625, filed on December 20, 2024, which is hereby incorporated by reference herein in its entirety.

## Claims

1. A photoelectric conversion element comprising:
an avalanche photodiode;
a first counter configured to count each of an output signal of the avalanche photodiode of a first pixel and an output signal of the avalanche photodiode of a second pixel;
a calculation unit configured to generate third output signals from the output signal of the avalanche photodiode of the first pixel and the output signal of the avalanche photodiode of the second pixel; and
a second counter circuit configured to count the number of third output signals.

2. The photoelectric conversion element according to claim 1, wherein the calculation unit executes a logical AND operation on the output signal of the avalanche photodiode of the first pixel and the output signal of the avalanche photodiode of the second pixel.

3. The photoelectric conversion element according to claim 1 or 2, wherein the calculation unit executes an exclusive OR operation on the output signal of the avalanche photodiode of the first pixel and the output signal of the avalanche photodiode of the second pixel.

4. The photoelectric conversion element according to any one of claims 1 to 3, further comprising a color filter for color separation provided for each pixel,
wherein the first and second pixels are adjacent pixels of same color.

5. The photoelectric conversion element according to any one of claims 1 to 4, wherein the calculation unit is provided in common for a plurality of pixels.

6. A photoelectric conversion device comprising:
the photoelectric conversion element according to any one of claims 1 to 5;
detection unit configured to detect occurrence of count omission of the avalanche photodiode based on at least the third output signal.

7. The photoelectric conversion device according to claim 6, wherein, in the detection, occurrence of the count omission is detected based on a difference between a count value of the first count circuit and a count value of the second count circuit.

8. The photoelectric conversion device according to claim 6 or 7, wherein, in the detection, the occurrence of the count omission is detected based on whether the count value of the second count circuit is less than a predetermined value.

9. The photoelectric conversion device according to any one of claims 6 to 8, further comprising: control unit configured to control the avalanche photodiode so that the occurrence of the count omission is suppressed when count omission is detected in the detection.

10. The photoelectric conversion device according to any one of claims 6 to 9, wherein, when count omission is detected, a recharge cycle of the avalanche photodiode of the first pixel and the avalanche photodiode of the second pixel is controlled to be shorter than a predetermined cycle.

11. The photoelectric conversion device according to any one of claims 6 to 10, wherein, when the count omission is detected, at least one of a saturation determination count number, an exposure time, and a recharge cycle is controlled such that the saturation determination count number of the avalanche photodiode becomes smaller than a maximum recharge number defined as a quotient of the exposure time divided by the recharge cycle.

12. The photoelectric conversion device according to any one of claims 6 to 11, wherein, when the count omission is detected, a recharge cycle of an avalanche photodiode corresponding to a color filter of predetermined color is controlled to differ from a recharge cycle of an avalanche photodiode corresponding to a color filter of another color.

13. The photoelectric conversion device according to any one of claims 6 to 12, further comprising:
a signal processing unit configured to suppress an upper limit of a signal level of each pixel or reduce saturation of a color signal to bring the saturation close to white, when the count omission is detected.

14. A photoelectric conversion method using a photoelectric conversion element that includes an avalanche photodiode, a first counter configured to count each of an output signal of the avalanche photodiode of a first pixel and an output signal of the avalanche photodiode of a second pixel, a calculation unit configured to generate third output signals from the output signal of the avalanche photodiode of the first pixel and the output signal of the avalanche photodiode of the second pixel and a second counter circuit configured to count the number of third output signals, the method comprising:
a detection step of detecting occurrence of count omission of the avalanche photodiode based on at least the third output signal.

15. A non-transitory computer-readable storage medium configured to store a computer program for a photoelectric conversion method of executing the following process,
wherein the photoelectric conversion element includes an avalanche photodiode, a first counter configured to count each of an output signal of the avalanche photodiode of a first pixel and an output signal of the avalanche photodiode of a second pixel, a calculation unit configured to generate third output signals from the output signal of the avalanche photodiode of the first pixel and the output signal of the avalanche photodiode of the second pixel, and a second counter circuit configured to count the number of third output signals, and
wherein the process includes a detection step of detecting occurrence of count omission of the avalanche photodiode based on at least the third output signal.
